# EUROPEAN PATENT SPECIFICATION

(11) **EP 3 772 963 B1**
(45) Date of publication and mention of the grant of the patent: **15.01.2025**
(21) Application number: 19713032.1
(22) Date of filing: 26.03.2019
(51) Int. Cl.: A01N 63/32, C05F 11/08, C05F 11/10, C12G 1/02

(54) **METHOD FOR INCREASING THE CONTENT OF THIOL PRECURSORS IN PLANTS**
VERFAHREN ZUR ERHÖHUNG DES GEHALTS VON THIOLVORLÄUFERVERBINDUNGEN IN PFLANZEN
PROCÉDÉ D'AUGMENTATION DE LA TENEUR EN PRÉCURSEURS DE COMPOSÉS THIOL DANS LES PLANTES

(30) Priority: 26.03.2018 EP 18290023
(43) Date of publication of application: 17.02.2021
(73) Proprietor: Danstar Ferment AG, 6300 Zug (CH)
(72) Inventor: MOREL, Matthieu, 30400 Villeneuve Les Avignon (FR); SANCHEZ, Jean-Marc, 31700 Daux (FR)
(74) Representative: J A Kemp LLP
(86) International application number: PCT/EP2019/057642
(87) International publication number: WO 2019/185661

(56) References cited:
- US-B2- 8 268 372
- ENGELA C. KRITZINGER ET AL: "Role of Glutathione in Winemaking: A Review", JOURNAL OF AGRICULTURAL AND FOOD CHEMISTRY, vol. 61, no. 2, 31 December 2012 (2012-12-31), US, pages 269 - 277, XP055504742, ISSN: 0021-8561, DOI: 10.1021/jf303665z
- FEDRIZZI BRUNO ET AL: "First Identification of 4- S -Glutathionyl-4-methylpentan-2-one, a Potential Precursor of 4-Mercapto-4-methylpentan-2-one, in Sauvignon Blanc Juice", JOURNAL OF AGRICULTURAL AND FOOD CHEMISTRY, vol. 57, no. 3, 6 January 2009 (2009-01-06), US, pages 991 - 995, XP093003081, ISSN: 0021-8561, Retrieved from the Internet <URL:https://pubs.acs.org/doi/pdf/10.1021/jf802799w> DOI: 10.1021/jf802799w
- SUKLJE KATJA ET AL: "Inactive dry yeast application on grapes modify Sauvignon Blanc wine aroma", FOOD CHEMISTRY, ELSEVIER LTD, NL, vol. 197, 26 November 2015 (2015-11-26), pages 1073 - 1084, XP029348081, ISSN: 0308-8146, DOI: 10.1016/J.FOODCHEM.2015.11.105
- M GABRIELLI: "Additions of glutathione or specific glutathione-rich dry inactivated yeast preparation (DYP) to sauvignon blanc must : effect on wine chemical and sensory composition", S AFR J ENOL VITIC, vol. 38, no. 1, 1 January 2017 (2017-01-01), pages 18 - 28, XP055505105

## Description

### TECHNOLOGICAL FIELD

The present disclosure relates to a method of using glutathione-enriched yeast, active glutathione-enriched yeast, inactivated glutathione-enriched yeast, glutathione-enriched yeast extract, glutathione-enriched yeast autolysate, glutathione-enriched yeast cell walls, or a combination thereof on grapes, vines and leaves prior to harvesting the fruits in order to increase the content or concentration of thiol precursors in the fruits in comparison with an untreated control. The present disclosure further relates to a method for producing a grape preparation with an increased content of thiol precursors comprising applying an effective amount of a glutathione-enriched yeast, an active glutathione-enriched yeast, ann inactivated glutathione-enriched yeast, a glutathione-enriched yeast extract, a glutathione-enriched yeast autolysate, glutathione-enriched yeast cell walls, or a combination thereof to the grapes and foliage, and grape preparations produced by such methods. The present disclosure also relates to the use of a glutathione-enriched yeast, an active glutathione-enriched yeast, an inactivated glutathione-enriched yeast, a glutathione-enriched yeast extract, a glutathione-enriched yeast autolysate, glutathione-enriched yeast cell walls, or a combination thereof for increasing the content of thiol precursors in grapes.

### BACKGROUND

The aroma of a product is often one of the most important factors in determining the quality and intrinsic value of the product. For example, small variations in the presence and concentration of volatile aroma compounds can mean the difference between a premium and an average table wine.

In the case of wine, some of the most potent aroma compounds are volatile or varietal thiols like 3-mercaptohexan-1-ol (3MH), 3-mercaptohexyl acetate (3MHA) and 4-mercapto-4-methylpentan-2-one (4MM). They have particularly low detection thresholds. Their presence is considered essential for creating unique varietal flavour attributes which contribute positively to wine. These volatile thiols are normally non-detectable in grape juice but are synthesized and released by the yeast from a range of precursors during alcoholic fermentation. Indeed, these aromas exist in grapes as non-volatile S-cysteine conjugate precursors. The concentration of volatile thiols in wine is directly related to the concentration of their precursors in the grapes, even though only a minor portion (<5%) of these precursors is actually concerted to aroma compounds (The Science of Grapevines, Second Edition).

Previous studies have shown that nitrogen deficiency reduces the aromatic quality of, for example, Sauvignon blanc, as well as its potential for ageing. This is thought to be linked to the reduced synthesis of volatile thiol precursors, as well as of glutathione, which plays an important role in protecting volatile thiols from oxidation. Studies had demonstrated that a foliar application of nitrogen improved vine nitrogen status and enhanced aroma expression of white and rosé wines (e.g. grapes Colombard, Sauvignon, Melon, Gros Manseng or Négrette). This effect was also enhanced when nitrogen and sulfur were applied simultaneously. Furthermore, moderate water stress of grapevines after fruit set has been demonstrated to increase the concentration of conjugated thiol precursors and produced wines of a high quality (Peyrot des Gachons et al., 2005). Thus, formation of wine thiol precursors is a dynamic process, which can be influenced by vineyard and winery processing operations.

Glutathione is important in wine because it has the ability to scavenge ortho-quinones, main protagonists of color browning and aroma loss due to oxidation mechanisms. Because it has a very low oxydoreduction potential, it can act as a strong buffer in many cellular oxydoreduction reactions. It has been known for years that it is a more potent anti-oxidant than ascorbic acid. It then plays a critical role in preventing the oxidation of must phenols as it can react via its -SH group with caftaric acid - one of the most susceptible phenols to oxidation in musts and generate Grape Reaction Product (GRP) which is a stable and colorless compound (Moutounet *et al,* 2001). Notably, this mechanism has been shown for GSH and not for the other compounds present in must or in yeast, and possessing SH-group (such as cysteine or glutamyl-cysteine for instance). GSH can also compete with several thiols (aromatic compounds such as 3-mercapto-hexanol (3MH), its acetate 3-mercapto-hexanol acetate (3MH-A) and 4-methyl-mercapto-pentanone (4MMP)) present in wines under the form of precursors or aromatic molecules, for o-quinones thus protecting certain wine aromas (Dubourdieu *et al,* 2004). The effect of GSH on wine as a natural anti-oxidant for the preservation of wine aroma and colour is well understood now. Having high levels of glutathione in wine is then important for the preservation of aroma and color. The level of glutathione can vary in must as it is based on grape varietals, viticultural practices and the winemaking practices. In US patent no. 8,268,372, a glutathione-enriched yeast is introduced into a must in order to obtain fresh, fruitier white wines, with complex aromas, and that, during the ageing of these wines, the freshness of these aromas is preserved and browning is avoided. Suklje *et al,* (2015) describes the use of an inactive dry yeast application on grapes to modify Sauvignon blanc wine aroma. Gabrielli *et al,* (2017) describes the addition of glutathione or specific glutathione-rich dry inactivated yeast preparation (DYP) to Sauvignon blanc must and the effect on wine chemical and sensory composition. Kritzinger *et al,* (2012) reviews the role of glutathione in winemaking. Fedrizzi *et al,* (2009) describes the identification of 4-S-glutathionyl-4-methylpentan-2-one, a potential precursor of 4-mercapto-4-methylpentan-2-one, in Sauvignon blanc juice.

While the effect of a glutathione-enriched yeast for the prevention of defective ageing of white wines has been studied and reported, there are no previous reports on the effect of using a glutathione-enriched yeast on grapes, vines and leaves prior to harvesting the fruits in order to increase the content or concentration of thiol precursors in the grape berries. There is thus a need to provide further method for altering the character and nature of fruits such as grapes in order to increase the amount of precursor thiols that grapes and grapevines produce which non-volatile thiol precursors will release the volatile thiols during the fermentation.

### BRIEF SUMMARY

The scope of the invention is defined by the claims. Any aspects and examples of the present disclosure which do not fall under the scope of the appended claims do not form part of the invention and are merely provided for illustrative purposes.

The invention provides a method for increasing the content of thiol precursors in grapes comprising applying an effective amount of a glutathione-enriched yeast, an active glutathione-enriched yeast, an inactivated glutathione-enriched yeast, a glutathione-enriched yeast extract, a glutathione-enriched yeast autolysate, glutathione-enriched yeast cell walls, or a combination thereof to the grapes and foliage after fruit set thereby giving grapes an increased content of thiol precursors compared to untreated grapes, wherein the thiol precursors are:
(i) selected from the group consisting of cysteine-3M (S-3-(hexan-1-ol)-L-cysteine), cysteinyl-glycine-3M (3-S-cysteinylglycinehexan-1-ol), gamma-glutamyl-cysteine-3MH (S-3-(hexan-1-ol)-gamma-glutamyl-cysteine), glutathione-3MH (S-(3-hexan-1-ol)-glutathione), Cys-4MMP (4-(4-methylpentan-2-one)-L-cysteine), CysGly-4MMP precursor (S-4-mercapto-4-methylpentan-2-one-1-cysteinyl-glycine), gamma GluCys-4MMP precursor (S-4-mercapto-4-methylpentan-2-one-N-(L-gamma-glutamyl)-L-cysteine), Glut-4MMP precursor (S-4-(4-methylpentan-2-one)-glutathione), and combinations thereof, optionally wherein the thiol precursor is glutathione-3MH (S-(3-hexan-1-ol)-glutathione) and/or Cys-4MMP (4-(4-methylpentan-2-one)-L-cysteine); and/or
(ii) the precursors of volatile thiol 3-mercaptohexan-1-ol (3MH) and/or volatile thiol 4-mercapto-4-methylpentan-2-one (4MPP).

The invention also provides a method for producing a grape preparation with an increased content of thiol precursors comprising:
(1) applying an effective amount of a glutathione-enriched yeast, an active glutathione-enriched yeast, an inactivated glutathione-enriched yeast, a glutathione-enriched yeast extract, a glutathione-enriched yeast autolysate, glutathione-enriched yeast cell walls, or a combination thereof to the grapes and foliage after fruit set; and
(2) harvesting and processing the grapes to obtain the grape preparation which has an increased content of thiol precursors, wherein the thiol precursors are:
   (i) selected from the group consisting of cysteine-3M (S-3-(hexan-1-ol)-L-cysteine), cysteinyl-glycine-3M (3-S-cysteinylglycinehexan-1-ol), gamma-glutamyl-cysteine-3MH (S-3-(hexan-1-ol)-gamma-glutamyl-cysteine), glutathione-3MH (S-(3-hexan-1-ol)-glutathione), Cys-4MMP (4-(4-methylpentan-2-one)-L-cysteine), CysGly-4MMP precursor (S-4-mercapto-4-methylpentan-2-one-1-cysteinyl-glycine), gamma GluCys-4MMP precursor (S-4-mercapto-4-methylpentan-2-one-N-(L-gamma-glutamyl)-L-cysteine), Glut-4MMP precursor (S-4-(4-methylpentan-2-one)-glutathione), and combinations thereof, optionally wherein the thiol precursor is glutathione-3MH (S-(3-hexan-1-ol)-glutathione) and/or Cys-4MMP (4-(4-methylpentan-2-one)-L-cysteine); and/or
   (ii) the precursors of volatile thiol 3-mercaptohexan-1-ol (3MH) and/or volatile thiol 4-mercapto-4-methylpentan-2-one (4MPP).

The invention also provides use of an effective amount of a glutathione-enriched yeast, an active glutathione-enriched yeast, an inactivated glutathione-enriched yeast, a glutathione-enriched yeast extract, a glutathione-enriched yeast autolysate, glutathione-enriched yeast cell walls, or a combination thereof for increasing the content of thiol precursors in grapes comprising applying to the grapes and foliage after fruit set said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof thereby giving grapes an increased content of thiol precursors compared to untreated grapes wherein the thiol precursors are:
(i) selected from the group consisting of cysteine-3M (S-3-(hexan-1-ol)-L-cysteine), cysteinyl-glycine-3M (3-S-cysteinylglycinehexan-1-ol), gamma-glutamyl-cysteine-3MH (S-3-(hexan-1-ol)-gamma-glutamyl-cysteine), glutathione-3MH (S-(3-hexan-1-ol)-glutathione), Cys-4MMP (4-(4-methylpentan-2-one)-L-cysteine), CysGly-4MMP precursor (S-4-mercapto-4-methylpentan-2-one-1-cysteinyl-glycine), gamma GluCys-4MMP precursor (S-4-mercapto-4-methylpentan-2-one-N-(L-gamma-glutamyl)-L-cysteine), Glut-4MMP precursor (S-4-(4-methylpentan-2-one)-glutathione), and combinations thereof, optionally wherein the thiol precursor is glutathione-3MH (S-(3-hexan-1-ol)-glutathione) and/or Cys-4MMP (4-(4-methylpentan-2-one)-L-cysteine); and/or
(ii) the precursors of volatile thiol 3-mercaptohexan-1-ol (3MH) and/or volatile thiol 4-mercapto-4-methylpentan-2-one (4MPP).

In an embodiment, the grapes are white or red grapes. In another embodiment, the white grapes are Sauvignon grapes Gewurztraminer grapes, Riesling grapes or Verdejo grapes. In an embodiment, the yeast is a *Saccharomyces.* In another embodiment, the yeast is a non-*Saccharomyces* yeast. In still another embodiment, the yeast belongs to the species S. *cerevisiae* or *S*. *cerevisiae* var. *boulardii.* In yet another embodiment, the non-Saccharomyces yeast belongs to the genera *Candida, Torula, Hanseniaspora, Hansenula, Kluyveromyces, Metschnikowia, Pichia, Starmerella, Torulaspora* or mixture thereof. In an embodiment, the grapes are treated between the beginning of veraison and the end of veraison. In an embodiment, the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or a combination thereof contains at least 0.5% of glutathione, at least 1% of glutathione, at least 2% of glutathione, at least 3% of glutathione, at least 4% of glutathione, at least 5% of glutathione, at least 6% of glutathione, at least 7% of glutathione, at least 8% of glutathione, at least 9% of glutathione or at least 10% of glutathione by weight relative to the weight of solids of the yeast. In another embodiment, said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof is applied to the grapes and foliage at a rate of 0.05 to 20 kg/ha, 0.1 to 20 kg/ha, 0.5 to 20 kg/ha, 1 to 15 kg/ha, 1 to 10 kg/ha, 2 to 10 kg/ha or 2 to 5 kg/ha. In still another embodiment, said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof is applied to the grapes and foliage at a rate of at least 2 kg/ha.

In the methods and uses of the present disclosure, the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be applied between the beginning of veraison and the end of veraison. The glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be applied at at least 2% veraison. The glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be applied between 2% and 98% veraison, between 2% and 90% veraison, between 2% and 80% veraison, between 2% and 70% veraison, between 2% and 60% veraison, between 2% and 50% veraison, between 2% and 40% veraison, between 2% and 30% veraison, between 2% and 20% veraison, between 2% and 15% veraison, between 2% and 10% veraison, between 2% and 8% veraison, between 2% and 6% veraison.

In the methods and uses of the present disclosure, the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be applied at phenological growth stage E-L 34 or thereafter. The glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be applied between phenological growth stages E-L 34 and E-L 39, between phenological growth stages E-L 34 and E-L 38, between phenological growth stages E-L 34 and E-L 37, or between phenological growth stages E-L 34 and E-L 36. The glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be applied at phenological growth stages E-L 34 and/or E-L 35. E-L phenological growth stages refer to the system devised by Eichhorn and Lorenz and are well known in the art.

In any the methods and uses of the present, a single application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be performed.

### DETAILED DESCRIPTION

It has been unexpectedly discovered that a pre-harvest application of a glutathione-enriched yeast resulted in an increased thiol precursor content in the grapes in comparison with untreated controls. The present disclosure provides a method for increasing the content of thiol precursors in grapes by application of a glutathione-enriched yeast, an active glutathione-enriched yeast, an inactivated glutathione-enriched yeast, a glutathione-enriched yeast extract, a glutathione-enriched yeast autolysate, glutathione-enriched yeast cell walls, or a combination thereof to the grapes, vines and/or leaves before the grape berries are harvested.

The present disclosure provides grape berries with an increased content in thiol precursors in comparison with untreated controls. In this regard, examples of volatile or varietal thiol compounds and their non-volatile precursors present in grapes are as follows:
4MMP (4-mercapto-4-methylpentan-2-one) and its non-volatile precursor Cys-4MMP (4-(4-methylpentan-2-one)-L-cysteine), CysGly-4MMP precursor (S-4-mercapto-4-methylpentan-2-one-1-cysteinyl-glycine), gamma GluCys-4MMP precursor (S-4-mercapto-4-methylpentan-2-one-N-(L-gamma-glutamyl)-L-cysteine) and Glut-4MMP precursor (S-4-(4-methylpentan-2-one)-glutathione); 3MHA (3-mercaptohexyl acetate) and its non-volatile pre-precursor Cys-3MH (3-(hexan-1-ol)-L-cysteine); the direct precursor of 3MHA is 3MH (3-mercaptohexan-1-ol); 3MH (3-mercaptohexan-1-ol) and its non-volatile precursors Cys-3MH precursor (S-3-(hexan-1-ol)-L-cysteine), Cysgly-3-MH precursor (3-S-cysteinylglycinehexan-1-ol), gamma-GluCys-3MH precursor (S-3-(hexan-1-ol)-gamma-glutamyl-cysteine) and 3MH-S-glut precursor (S-(3-hexan-1-ol)-glutathione); and 4MMPOH (4-mercapto-4-methylpentan-2-ol) and its non-volatile precursor S-4-(4- methylpentan-2-ol)-L-cysteine.

In the context of the present disclosure, the expression "enriched yeast" expressly denotes a glutathione-enriched yeast. The term "glutathione" is intended to mean the molecule composed of the three amino acids glutamate-cysteine-glycine, in its oxidized or reduced form. In its oxidized form, a first molecule of glutathione may form a disulfide bond with a second molecule of glutathione to form oxidized glutathione disulfide (GSSG).

The production of glutathione-enriched yeast is well known to those skilled in the art who know how to prepare it by means of one of the techniques at their disposal; see, for example, Catalino et al., 1992, Applied Microbiology and Biotechnology, Ed Springer-Verlag, pp. 141-146.

In the method according to the present disclosure, said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof contains more than 0.5% of glutathione by weight relative to the weight of solids of the yeast. Advantageously, said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof contains at least 0.5% of glutathione (or reduced glutathione and oxidized glutathione disulfide (GSSG)), at least 1% of glutathione, at least 2% of glutathione, at least 3% of glutathione, at least 4% of glutathione, at least 5% of glutathione, at least 6% of glutathione, at least 7% of glutathione, at least 8% of glutathione, at least 9% of glutathione or at least 10% of glutathione by weight relative to the weight of solids of the yeast.

Moreover, the enriched yeast can be applied to the fruits (e.g. grapes), foliage and/or grapevines in the form of inactive dry yeast, but also in the form of active dry yeast. There is in fact nothing to stop the user carrying out several introductions of enriched yeast, taken in different forms. Alternatively, the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof can be applied to the fruits (e.g. grapes), foliage and/or grapevines in the form of inactive liquid yeast or active liquid yeast. Alternatively, the yeast composition applied to the fruits (e.g. grapes), foliage and/or grapevines may comprise at least one live yeast, inactivated yeast, yeast extract, yeast autolysate, or yeast cell walls obtained by physico-chemical and/or enzymatic treatment, or any combination of the above. The physico-chemical treatment may comprise a temperature and/or pH treatment. In an embodiment, the yeast composition comprises a glutathione-enriched yeast extract. The various processes and suitable conditions for preparing the different yeast compositions are known to the person skilled in the art.

The yeast may be any suitable *Saccharomyces* or a non-*Saccharomyces* yeast as, for example, from the genera *Candida, Torula, Hanseniaspora, Hansenula, Kluyveromyces, Metschnikowia, Pichia, Starmerella, Torulaspora.* In an embodiment, the genera *Saccharomyces* includes, without limitation, *S*. *cerevisiae* or *S*. *cerevisiae var. boulardii.* In an embodiment, the yeast is *Saccharomyces cerevisiae.* In an embodiment, a single yeast strain can be used. Alternatively, two or more different yeast strains or species can be used in combination.

According to the present invention, the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied to the grapes and foliage after fruit set (e.g. at phenological growth stage E-L 27 or thereafter) to achieve the desired effect on the concentration of the thiol precursor content in the grape berries. In an embodiment, the timing of said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof application is during the period of the pre-veraison (approximately 3 weeks before veraison, where veraison is defined as berry softening) through the post-veraison period but prior to harvest. In another embodiment, the application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is performed at the onset of veraison (e.g. at least 2% veraison or at phenological growth stage E-L 34 or thereafter).

Two methods for determining percentage veraison (i.e. the period during which the berries start to soften and to colour) are well known. In the first method, a representative sample of at least 100 berries (e.g. 20 berries from 5 different vines) is tested by palpation, either *in situ* or in the laboratory. For some varieties, it is not possible to take samples because the bunches of grape berries are too compact. It is therefore necessary to carry out an *in situ* assessment without destructive sampling. Alternatively, percentage version can be determined based on visual inspection of the colour appearance of berries. This method involves visually estimating the percentage of colored berries in the whole bunches of grapes and is suitable for interannual comparisons of the same grape variety on the same site.

In another embodiment, the application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is performed during veraison (e.g. at or between any of phenological growth stages E-L 34, 35, 36, 37, 38, and 39 or between 1% and 99% veraison). The glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be applied at greater than 2% veraison, at greater than 5% veraison, at greater than 10% veraison, at greater than 15% veraison, at greater than 20% veraison, at greater than 25% veraison, at greater than 30% veraison, at greater than 35% veraison, at greater than 40% veraison, at greater than 45% veraison, at greater than 50% veraison, at greater than 55% veraison, at greater than 60% veraison, at greater than 65% veraison, at greater than 70% veraison, at greater than 75% veraison, at greater than 80% veraison, at greater than 85% veraison, at greater than 90% veraison, or at greater than 95% veraison. The application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be performed before 100% veraison, before 95% veraison, before 90% veraison, before 85% veraison, before 80% veraison, before 75% veraison, before 70% veraison, before 65% veraison, before 60% veraison, before 55% veraison, before 50% veraison, before 45% veraison, before 40% veraison, before 35% veraison, before 30% veraison, before 25% veraison, before 20% veraison, before 15% veraison, before 10% veraison, before 5% veraison, before 4% veraison, before 3% veraison, or before 2% veraison. In another embodiment the application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may start at whole veraison (e.g. at 100% veraison). In another embodiment, the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied between 2% and 98% veraison, between 2% and 90% veraison, between 2% and 80% veraison, between 2% and 70% veraison, between 2% and 60% veraison, between 2% and 50% veraison, between 2% and 40% veraison, between 2% and 30% veraison, between 2% and 20% veraison, between 2% and 15% veraison, between 2% and 10% veraison, between 2% and 8% veraison, or between 2% and 6% veraison. In another embodiment, the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be applied between phenological growth stages E-L 34 and E-L 39, between phenological growth stages E-L 34 and E-L 38, between phenological growth stages E-L 34 and E-L 37, or between phenological growth stages E-L 34 and E-L 36. The glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be applied at phenological growth stages EL 34 and/or E-L 35. In another embodiment, fruits, foliage and/or grapevines may be applied with the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof after veraison (e.g. at phenological growth stage E-L 39 or thereafter) and before harvesting grapes.

The treatment with the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof may be performed in one or more successive applications before harvesting. Advantageously, it has been found that a single application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof provides an increase in thiol precursor content of the treated grapes, for example an increase in the content of precursors of the volatile thiol 3MH, e.g. 3MH-S-glut (S-(3-hexan-1-ol)-glutathione). This provides advantages such as time saving and reduced cost as compared to strategies which require multiple applications. Thus, in an embodiment, a single application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is performed.

Alternatively, the treatment may be performed in two or more successive applications of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof. For example, in an embodiment, a first application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is performed followed by a second application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof. The second application may be performed from one to 20 days after the first application. In an embodiment, the second application is performed at least 1 day, at least 2 days, at least 3 days, at least 4 days, at least 5 days, at least 6 days, at least 7 days, at least 8 days, at least 9 days, at least 10 days, at least 11 days, at least 12 days, at least 13 days, at least 14 days, at least 15 days, at least 16 days, at least 17 days, at least 18 days, at least 19 days, or at least 20 days after the first application. In an embodiment, the second application is performed at least 11 days, at least 12 days, at least 13 days, at least 14 days, at least 15 days, at least 16 days, at least 17 days, at least 18 days, at least 19 days, or at least 20 days after the first application. In an embodiment, the second application is performed 1 day, 2 days, 3 days, 4 days, 5 days, 6 days, 7 days, 8 days, 9 days, 10 days, 11 days, 12 days, 13 days, 14 days, 15 days, 16 days, 17 days, 18 days, 19 days, or 20 days after the first application. Both the first and second applications may be performed before the onset of veraison. Both the first and second applications may be performed pre-harvest. Both the first and second applications may be performed post-veraison and pre-harvest.

Both the first and second applications may be performed during veraison (e.g. 5 to 95% veraison). The first application may be performed during veraison (e.g. from 5 to 95% veraison) and the second application may be performed post-veraison but pre-harvest.

In the context of the present disclosure, a glutathione-enriched yeast, an active glutathione-enriched yeast, an inactivated glutathione-enriched yeast, a glutathione-enriched yeast extract, a glutathione-enriched yeast autolysate, glutathione-enriched yeast cell walls, or a combination thereof is contacted or applied to the fruits, foliage and/or grapevines via e.g. spraying an effective amount of the enriched yeast to the grape berries before harvest in one treatment or via multiple treatments. The term "contacted or applied" as used herein refers to any mode of bringing together the surface to be treated, e.g. the aerial parts of a plant or fruits, with a glutathione-enriched yeast, an active glutathione-enriched yeast, an inactivated glutathione-enriched yeast, a glutathione-enriched yeast extract, a glutathione-enriched yeast autolysate, glutathione-enriched yeast cell walls, or a combination thereof. The method of contacting the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof with a plant is not limited to a specific method as long as it enables an efficient contact of the yeast with the plant or plant parts. Spraying is specifically useful in an industrial production method.

The amount of glutathione-enriched yeast, active glutathione-enriched yeast, inactivated glutathione-enriched yeast, glutathione-enriched yeast extract, glutathione-enriched yeast autolysate, glutathione-enriched yeast cell walls, or the combination thereof applied to the plant is an effective amount to increase the content or concentration of thiol precursors in the grape berries in comparison with untreated controls. Suitably, the amount applied to the plant is a conventional amount, conventional in the sense of comparable to the amount of known nitrogen or nitrogen and sulfur that are applied to grapevines the increase of thiol precursors and/or thiols level in grape berries and must. However, it has been surprisingly discovered that lesser amounts can be used of glutathione-enriched yeast (e.g. of glutathione-enriched yeast extract) than conventional nitrogen or nitrogen and sulfur application to obtain comparable results. The glutathione-enriched yeast, active glutathione-enriched yeast, inactivated glutathione-enriched yeast, glutathione-enriched yeast extract, glutathione-enriched yeast autolysate, glutathione-enriched yeast cell walls, or the combination thereof or composition of the present disclosure is applied to the grape berries, foliage and/or grapevines at application rates of 0.05 to 20 kg/ha, 0.1 to 20 kg/ha, 0.5 to 20 kg/ha, 1 to 15 kg/ha, 1 to 10 kg/ha, 2 to 10 kg/ha or 2 to 5 kg/ha. In an embodiment, the rate of application is at least 2 kg/ha. In an embodiment, the rate of application is less than 3 kg/ha, less than 2.5 kg/ha, or less than 2 kg/ha. In an embodiment, the rate of application is less than 0.1 kg/ha, less than 0.5 kg/ha, less than 1 kg/ha, or less than 2 kg/ha. In an embodiment, the rate of application is 0.05 kg/ha, 0.1 kg/ha, 0.5 kg/ha, 1 kg/ha, or 2 kg/ha. In an embodiment, the rate of application is from 0.05 to 2 kg/ha, from 0.1 to 1 kg/ha, or from 1 to 2 kg/ha.

Agricultural carriers may be used in combination with the enriched yeast of the present disclosure and include, for example, water, fertilizers, pesticides, plant-based oils, humectants, or combinations thereof. Adjuvants and surfactants could also be added to the enriched yeast.

In the context of the present disclosure, the white grapes used include varieties from the following groups, but are not limited to, Siria, Malvasia Fina, Thompson seedless, Semilion, Chenin blanc, Loureiro, Albariho, Trajadura, Sauvignon blanc, Verdejo, Chardonnay, Gewurztraminer, Riesling or mixtures thereof. Moreover, red grapes can also be used and include varieties from the following groups, but are not limited to, Grenache noir, Syrah, Cabernet franc, Cabernet sauvignon, Merlot, Pinot noir, Malbec or mixtures thereof.

The word "comprising" in the claims may be replaced by "consisting essentially of" or with "consisting of," according to standard practice in patent law.

The following example serves to further describe and define the invention, and is not intended to limit the invention in any way.

### EXAMPLE 1:

A replicated field experiment was conducted on the white wine grape cultivar 'Sauvignon" in the growing region of Lleida, Spain to test the effect of glutathione-enriched yeast on white grapes. Two treatments were tested: (i) an untreated control; and (ii) a single application of 2 kg/ha of glutathione-enriched yeast applied at the onset of veraison (i.e. at ~ 5% veraison, stage M, or phenological growth stage E-L 34 or 35 according to Eichhorn and Lorenz). There were 8 replicates of 10 vines for each treatment and the experiment was laid out in a randomized complete block (RCB) design. A glutathione-enriched yeast extract (belonging to the species *S*. *cerevisiae*) and containing 5% of GSH was applied using a commercial sprayer at a concentration of 2kg/ha in a volume of approximately 150l/ha in order to achieve thorough and complete coverage of the grape bunches and to the foliage as well.

Samples of 200 grape berries were harvested for each treatment at the time of commercial harvest for berry analysis. Before fermentation, bottling or aging, thiol precursors in the harvested berries were measured by HPLC.

The results of the chemical analysis are presented in Table 1.

**Table 1: Effect of a glutathione-enriched yeast extract treatment on the thiol precursor concentration of grape berries at harvest**

| Treatment | 3MH-S-glut (S-(3-hexan-1-ol)-glutathione) (µg/kg) | Cys-4MMP (4-(4-methylpentan-2-one)-L-cysteine) (ng/kg) |
|---|---|---|
| Untreated control | 282 | 300 |
| Glutathione-enriched yeast extract | 398 | 500 |

As shown in Table 1, the glutathione-enriched yeast extract treatment increased the concentration of thiol precursors (more particularly, the concentration of the precursors for gluthatione-3MH and Cys-4MMP) in the harvested grape berries compared to the untreated control grape berries. In particular, it was observed that the grape berries treated with the glutathione-enriched yeast extract contained about 1.4 times more 3MH-S-glut and about 1.6 times more Cys-4MMP than the untreated control grape berries.

Without wishing to be bound by theory, a similar increase in thiol precursor concentration would be seen for grapes treated with glutathione-enriched yeast as compared to control grapes treated with a yeast / yeast extract not enriched with glutathione.

Furthermore, as shown in Table 2, apart from increasing the thiol precursor concentration, the application of the glutathione-enriched yeast extract increased the level of total acidity, tartaric acid and malic acid in the grape berries which in turn will result in wines with greater freshness and improved aromatic intensity.

**Table 2: Total content of nitrogen (N), pH, total acidity, tartaric acid, malic acid and sugars in the grape berries subjected to the application of the glutathione-enriched yeast extract treatment**

| Parameters | Untreated control | Glutathione-enriched yeast extract |
|---|---|---|
| Total weight (200 berries) (g) | 165,29 | 192,87 |
| pH | 3,78 | 3,7 |
| Total acidity (g/l) | 17,32 | 19,51 |
| Tartaric acid (g/l) | 3,59 | 4,66 |
| Malic acid (g/l) | 1,56 | 2,66 |
| Total N (%) | 0,255 | 0,293 |
| Sugars (Brix) | 24,2 | 24,4 |

### REFERENCES

Dubourdieu et al. 2003. Rôle du glutathion sur l'évolution aromatique des vins blancs secs. Vinidea.net Wine Internet Technical Journal No. 17.
Moutounet M., Mazauric J.-P., Ducournau P. and Lemaire T. 2001. Wine micro-oxygenation. Principles and technological applications. Industria delle Bevande. 30: 253.
Peyrot des Gachons, C., Leeuwen, C., Tominaga, T., Soyer, J., Gaudillere, J., and Dubourdieu, D. 2005. Influence of water and nitrogen deficit on fruit ripening and aroma potential of vitis vinifera L cv Sauvignon Blanc in field conditions. Journal of the Science of Food and agriculture, 85: 73-85.
Keller, M. 2015. The science of grapevines - Anatomy and physiology. Second Edition. Academic Press, Elsevier.
Suklje K. et al. 2015. Inactive dry yeast application on grapes modify Sauvignon Blanc wine aroma. FOOD CHEMISTRY, 197: 1073-1084.
Gabrielli M. Additions of glutathione or specific glutathione-rich dry inactivated yeast preparation (DYP) to sauvignon blanc must: effect on wine chemical and sensory composition. S AFR J ENOL VITIC, 38: 18-28.
Kritzinger E.C. et al. 2012. Role of Glutathione in Winemaking: A Review. Journal of Agricultural and Food Chemistry, 61: 269-277.
Fedrizzi B. et al. 2009. First Identification of 4-S-Glutathionyl-4-methylpentan-2-one, a Potential Precursor of 4-Mercapto-4-methylpentan-2-one, in Sauvignon Blanc Juice. Journal of Agricultural and Food Chemistry, 57: 991-995.

## Claims

1. A method for increasing the content of thiol precursors in grapes comprising applying an effective amount of a glutathione-enriched yeast, an active glutathione-enriched yeast, an inactivated glutathione-enriched yeast, a glutathione-enriched yeast extract, a glutathione-enriched yeast autolysate, glutathione-enriched yeast cell walls, or a combination thereof to the grapes and foliage after fruit set thereby giving grapes an increased content of thiol precursors compared to untreated grapes, wherein the thiol precursors are:
(i) selected from the group consisting of cysteine-3M (S-3-(hexan-1-ol)-L-cysteine), cysteinyl-glycine-3M (3-S-cysteinylglycinehexan-1-ol), gamma-glutamyl-cysteine-3MH (S-3-(hexan-1-ol)-gamma-glutamyl-cysteine), glutathione-3MH (S-(3-hexan-1-ol)-glutathione), Cys-4MMP (4-(4-methylpentan-2-one)-L-cysteine), CysGly-4MMP precursor (S-4-mercapto-4-methylpentan-2-one-1-cysteinyl-glycine), gamma GluCys-4MMP precursor (S-4-mercapto-4-methylpentan-2-one-N-(L-gamma-glutamyl)-L-cysteine), Glut-4MMP precursor (S-4-(4-methylpentan-2-one)-glutathione), and combinations thereof, optionally wherein the thiol precursor is glutathione-3MH (S-(3-hexan-1-ol)-glutathione) and/or Cys-4MMP (4-(4-methylpentan-2-one)-L-cysteine); and/or
(ii) the precursors of volatile thiol 3-mercaptohexan-1-ol (3MH) and/or volatile thiol 4-mercapto-4-methylpentan-2-one (4MPP).

2. A method for producing a grape preparation with an increased content of thiol precursors comprising:
(1) applying an effective amount of a glutathione-enriched yeast, an active glutathione-enriched yeast, an inactivated glutathione-enriched yeast, a glutathione-enriched yeast extract, a glutathione-enriched yeast autolysate, glutathione-enriched yeast cell walls, or a combination thereof to the grapes and foliage after fruit set; and
(2) harvesting and processing the grapes to obtain the grape preparation which has an increased content of thiol precursors, wherein the thiol precursors are:
(i) selected from the group consisting of cysteine-3M (S-3-(hexan-1-ol)-L-cysteine), cysteinyl-glycine-3M (3-S-cysteinylglycinehexan-1-ol), gamma-glutamyl-cysteine-3MH (S-3-(hexan-1-ol)-gamma-glutamyl-cysteine), glutathione-3MH (S-(3-hexan-1-ol)-glutathione), Cys-4MMP (4-(4-methylpentan-2-one)-L-cysteine), CysGly-4MMP precursor (S-4-mercapto-4-methylpentan-2-one-1-cysteinyl-glycine), gamma GluCys-4MMP precursor (S-4-mercapto-4-methylpentan-2-one-N-(L-gamma-glutamyl)-L-cysteine), Glut-4MMP precursor (S-4-(4-methylpentan-2-one)-glutathione), and combinations thereof, optionally wherein the thiol precursor is glutathione-3MH (S-(3-hexan-1-ol)-glutathione) and/or Cys-4MMP (4-(4-methylpentan-2-one)-L-cysteine); and/or
(ii) the precursors of volatile thiol 3-mercaptohexan-1-ol (3MH) and/or volatile thiol 4-mercapto-4-methylpentan-2-one (4MPP).

3. The method of claim 1 or 2, wherein the grapes are white or red grapes; optionally wherein the white grapes are Sauvignon grapes, Gewurztraminer grapes, Riesling grapes or Verdejo grapes.

4. The method of any one of claims 1 to 3, wherein:
(a) the yeast is a *Saccharomyces;* optionally wherein the yeast belongs to the species *S*. *cerevisiae* or *S*. *cerevisiae var. boulardii;* or
(b) the yeast is a non*-Saccharomyces* yeast; optionally wherein the non-*Saccharomyces* yeast belongs to the genera *Candida, Torula, Hanseniaspora, Hansenula, Kluyveromyces, Metschnikowia, Pichia, Starmerella, Torulaspora* or mixture thereof.

5. The method of any one of claims 1 to 4, wherein the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied:
(i) between the beginning of veraison and the end of veraison, optionally wherein:
(a) the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied at at least 2% veraison; and/or
(b) the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied between 2% and 98% veraison, between 2% and 90% veraison, between 2% and 80% veraison, between 2% and 70% veraison, between 2% and 60% veraison, between 2% and 50% veraison, between 2% and 40% veraison, between 2% and 30% veraison, between 2% and 20% veraison, between 2% and 15% veraison, between 2% and 10% veraison, between 2% and 8% veraison, or between 2% and 6% veraison; or
(ii) at phenological growth stage E-L 27 or thereafter; or
(iii) at phenological growth stage E-L 34 or thereafter, preferably wherein the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied between phenological growth stages E-L 34 and E-L 39, between phenological growth stages E-L 34 and E-L 38, between phenological growth stages E-L 34 and E-L 37, or between phenological growth stages E-L 34 and E-L 36, more preferably wherein the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied at phenological growth stages E-L 34 and/or E-L 35.

6. The method of any one of claims 1 to 5, wherein a single application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is performed.

7. The method of any one of claims 1 to 6, wherein:
(i) said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof contains at least 0.5% of glutathione, at least 1% of glutathione, at least 2% of glutathione, at least 3% of glutathione, at least 4% of glutathione, at least 5% of glutathione, at least 6% of glutathione, at least 7% of glutathione, at least 8% of glutathione, at least 9% of glutathione or at least 10% of glutathione by weight relative to the weight of solids of the yeast; and/or
(ii) said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof is applied to the grapes and foliage at a rate of 0.05 to 20 kg/ha, 0.1 to 20 kg/ha, 0.5 to 20 kg/ha, 1 to 15 kg/ha, 1 to 10 kg/ha, 2 to 10 kg/ha or 2 to 5 kg/ha; preferably wherein said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof is applied to the grapes and foliage at a rate of at least 2 kg/ha.

8. Use of an effective amount of a glutathione-enriched yeast, an active glutathione-enriched yeast, an inactivated glutathione-enriched yeast, a glutathione-enriched yeast extract, a glutathione-enriched yeast autolysate, glutathione-enriched yeast cell walls, or a combination thereof for increasing the content of thiol precursors in grapes comprising applying to the grapes and foliage after fruit set said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof thereby giving grapes an increased content of thiol precursors compared to untreated grapes, wherein the thiol precursors are:
(i) selected from the group consisting of cysteine-3M (S-3-(hexan-1-ol)-L-cysteine), cysteinyl-glycine-3M (3-S-cysteinylglycinehexan-1-ol), gamma-glutamyl-cysteine-3MH (S-3-(hexan-1-ol)-gamma-glutamyl-cysteine), glutathione-3MH (S-(3-hexan-1-ol)-glutathione), Cys-4MMP (4-(4-methylpentan-2-one)-L-cysteine), CysGly-4MMP precursor (S-4-mercapto-4-methylpentan-2-one-1-cysteinyl-glycine), gamma GluCys-4MMP precursor (S-4-mercapto-4-methylpentan-2-one-N-(L-gamma-glutamyl)-L-cysteine), Glut-4MMP precursor (S-4-(4-methylpentan-2-one)-glutathione), and combinations thereof, optionally wherein the thiol precursor is glutathione-3MH (S-(3-hexan-1-ol)-glutathione) and/or Cys-4MMP (4-(4-methylpentan-2-one)-L-cysteine); and/or
(ii) the precursors of volatile thiol 3-mercaptohexan-1-ol (3MH) and/or volatile thiol 4-mercapto-4-methylpentan-2-one (4MPP).

9. The use of claim 8, wherein the grapes are white or red grapes; optionally wherein the white grapes are Sauvignon grapes, Gewurztraminer grapes, Riesling grapes or Verdejo grapes.

10. The use of claim 8 or 9, wherein:
(a) the yeast is a *Saccharomyces;* optionally wherein the yeast belongs to the species S. *cerevisiae* or *S*. *cerevisiae var. boulardii;* or
(b) the yeast is a non*-Saccharomyces* yeast; optionally wherein the non-*Saccharomyces* yeast belongs to the genera *Candida, Torula, Hanseniaspora, Hansenula, Kluyveromyces, Metschnikowia, Pichia, Starmerella, Torulaspora* or mixture thereof.

11. The use of any one of claims 8 to 10, wherein the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied between the beginning of veraison and the end of veraison, optionally wherein:
(i) (a) the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied at at least 2% veraison and/or (b) the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied between 2% and 98% veraison, between 2% and 90% veraison, between 2% and 80% veraison, between 2% and 70% veraison, between 2% and 60% veraison, between 2% and 50% veraison, between 2% and 40% veraison, between 2% and 30% veraison, between 2% and 20% veraison, between 2% and 15% veraison, between 2% and 10% veraison, between 2% and 8% veraison, or between 2% and 6% veraison; or
(ii) the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied at phenological growth stage E-L 34 or thereafter, preferably wherein the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied between phenological growth stages E-L 34 and E-L 39, between phenological growth stages E-L 34 and E-L 38, between phenological growth stages E-L 34 and E-L 37, or between phenological growth stages E-L 34 and E-L 36, more preferably wherein the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is applied at phenological growth stages E-L 34 and/or E-L 35.

12. The use of any one of claims 8 to 11, wherein
(i) a single application of the glutathione-enriched yeast, the active glutathione-enriched yeast, the inactivated glutathione-enriched yeast, the glutathione-enriched yeast extract, the glutathione-enriched yeast autolysate, the glutathione-enriched yeast cell walls, or the combination thereof is performed;
(ii) said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof contains at least 0.5% of glutathione, at least 1% of glutathione, at least 2% of glutathione, at least 3% of glutathione, at least 4% of glutathione, at least 5% of glutathione, at least 6% of glutathione, at least 7% of glutathione, at least 8% of glutathione, at least 9% of glutathione or at least 10% of glutathione by weight relative to the weight of solids of the yeast; and/or
(iii) said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof is applied to the grapes and foliage at a rate of 0.05 to 20 kg/ha, 0.1 to 20 kg/ha, 0.5 to 20 kg/ha, 1 to 15 kg/ha, 1 to 10 kg/ha, 2 to 10 kg/ha or 2 to 5 kg/ha; preferably wherein said glutathione-enriched yeast, said active glutathione-enriched yeast, said inactivated glutathione-enriched yeast, said glutathione-enriched yeast extract, said glutathione-enriched yeast autolysate, said glutathione-enriched yeast cell walls, or said combination thereof is applied to the grapes and foliage at a rate of at least 2 kg/ha.

## Patentansprüche

1. Verfahren zum Erhöhen des Gehalts von Thiolvorläufern in Trauben, umfassend das Auftragen einer wirksamen Menge einer mit Glutathion angereicherten Hefe, einer aktiven mit Glutathion angereicherten Hefe, einer inaktivierten mit Glutathion angereicherten Hefe, einem mit Glutathion angereicherten Hefeextrakt, einem mit Glutathion angereicherten Hefeautolysat, mit Glutathion angereicherten Hefezellwänden oder einer Kombination davon, auf die Trauben und die Blätter nach Fruchtansatz, wodurch Trauben ein erhöhter Gehalt von Thiolvorläufern im Vergleich zu unbehandelten Trauben gegeben wird, wobei die Thiolvorläufer Folgendes sind:
(i) ausgewählt aus der Gruppe bestehend aus Cystein-3M (S-3-(Hexan-1-ol)-L-Cystein), Cysteinyl-Glycin-3M (3-S-Cysteinylglycinhexan-1-ol), Gamma-Glutamyl-Cystein-3MH (S-3-(Hexan-1-ol)-Gamma-Glutamyl-Cystein), Glutathion-3MH (S-(3-Hexan-1-ol)-Glutathion), Cys-4MMP (4-(4-Methylpentan-2-on)-L-Cystein), CysGly-4MMP-Vorläufer (S-4-Mercapto-4-Methylpentan-2-on-1-Cysteinyl-Glycin), Gamma-GluCys-4MMP-Vorläufer (S-4-Mercapto-4-Methylpentan-2-on-N-(L-Gamma-Glutamyl)-L-Cystein), Glut-4MMP-Vorläufer (S-4-(4-Methylpentan-2-on)-Glutathion) und Kombinationen davon, wobei optional der Thiolvorläufer Glutathion-3MH (S-(3-Hexan-1-ol)-Glutathion) und/oder Cys-4MMP (4-(4-Methylpentan-2-on)-L-Cystein) ist; und/oder
(ii) die Vorläufer von flüchtigem Thiol-3-Mercaptohexan-1-ol (3MH) und/oder flüchtigem Thiol-4-Mercapto-4-Methylpentan-2-on (4MPP).

2. Verfahren zu Herstellen einer Traubenzubereitung mit einem erhöhten Gehalt von Thiolvorläufern, umfassend:
(1) Auftragen einer wirksamen Menge einer mit Glutathion angereicherten Hefe, einer aktiven mit Glutathion angereicherten Hefe, einer inaktivierten mit Glutathion angereicherten Hefe, einem mit Glutathion angereicherten Hefeextrakt, einem mit Glutathion angereicherten Hefeautolysat, mit Glutathion angereicherten Hefezellwänden oder einer Kombination davon, auf die Trauben und die Blätter nach Fruchtansatz, und
(2) Ernten und Verarbeiten der Trauben, um die Traubenzubereitung zu erhalten, die einen erhöhten Gehalt von Thiolvorläufern hat, wobei die Thiolvorläufer Folgendes sind:
(i) ausgewählt aus der Gruppe bestehend aus Cystein-3M (S-3-(Hexan-1-ol)-L-Cystein), Cysteinyl-Glycin-3M (3-S-Cysteinylglycinhexan-1-ol), Gamma-Glutamyl-Cystein-3MH (S-3-(Hexan-1-ol)-Gamma-Glutamyl-Cystein), Glutathion-3MH (S-(3-Hexan-1-ol)-Glutathion), Cys-4MMP (4-(4-Methylpentan-2-on)-L-Cystein), CysGly-4MMP-Vorläufer (S-4-Mercapto-4-Methylpentan-2-on-1-Cysteinyl-Glycin), Gamma-GluCys-4MMP-Vorläufer (S-4-Mercapto-4-Methylpentan-2-on-N-(L-Gamma-Glutamyl)-L-Cystein), Glut-4MMP-Vorläufer (S-4-(4-Methylpentan-2-on)-Glutathion) und Kombinationen davon, wobei optional der Thiolvorläufer Glutathion-3MH (S-(3-Hexan-1-ol)-Glutathion) und/oder Cys-4MMP (4-(4-Methylpentan-2-on)-L-Cystein) ist; und/oder
(ii) die Vorläufer von flüchtigem Thiol-3-Mercaptohexan-1-ol (3MH) und/oder flüchtigem Thiol-4-Mercapto-4-Methylpentan-2-on (4MPP).

3. Verfahren nach Anspruch 1 oder 2, wobei die Trauben weiße oder rote Trauben sind; wobei optional die weißen Trauben Sauvignon-Trauben, Gewürztraminer-Trauben, Riesling-Trauben oder Verdejo-Trauben sind.

4. Verfahren nach einem der Ansprüche 1 bis 3, wobei:
(a) die Hefe *Saccharomyces* ist; wobei optional die Hefe zur Art *S. cerevisiae* oder *S. cerevisiae var. boulardii* gehört; oder
(b) die Hefe eine *Nicht-Saccharomyces-*Hefe ist; wobei optional die Nicht-*Saccharomyces-*Hefe zu den Gattungen *Candida, Torula, Hanseniaspora, Hansenula, Kluyveromyces, Metschnikowia, Pichia, Starmerella, Torulaspora* oder Gemisch davon gehört.

5. Verfahren nach einem der Ansprüche 1 bis 4, wobei die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon wie folgt aufgetragen wird:
(i) zwischen dem Anfang von Veraison und dem Ende von Veraison, wobei optional:
(a) die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon bei mindestens 2 % Veraison aufgetragen wird; und/oder
(b) die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon zwischen 2 % und 98 % Veraison, zwischen 2 % und 90 % Veraison, zwischen 2 % und 80 % Veraison, zwischen 2 % und 70 % Veraison, zwischen 2 % und 60 % Veraison, zwischen 2 % und 50 % Veraison, zwischen 2 % und 40 % Veraison, zwischen 2 % und 30 % Veraison, zwischen 2 % und 20 % Veraison, zwischen 2 % und 15 % Veraison, zwischen 2 % und 10 % Veraison, zwischen 2 % und 8 % Veraison oder zwischen 2 % und 6 % Veraison aufgetragen wird; oder
(ii) bei phänologischer Wachstumsphase E-L 27 oder danach; oder
(iii) bei phänologischer Wachstumsphase E-L 34 oder danach, wobei bevorzugt die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon zwischen phänologischen Wachstumsphasen E-L 34 und E-L 39, zwischen phänologischen Wachstumsphasen E-L 34 und E-L 38, zwischen phänologischen Wachstumsphasen E-L 34 und E-L 37 oder zwischen phänologischen Wachstumsphasen E-L 34 und E-L 36 aufgetragen wird, wobei bevorzugter die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon bei phänologischen Wachstumsphasen E-L 34 und/oder E-L 35 aufgetragen wird.

6. Verfahren nach einem der Ansprüche 1 bis 5, wobei ein einzelnes Auftragen der mit Glutathion angereicherten Hefe, der aktiven mit Glutathion angereicherten Hefe, der inaktivierten mit Glutathion angereicherten Hefe, des mit Glutathion angereicherten Hefeextrakts, des mit Glutathion angereicherten Hefeautolysats, der mit Glutathion angereicherten Hefezellwände oder der Kombination davon durchgeführt wird.

7. Verfahren nach einem der Ansprüche 1 bis 6, wobei:
(i) die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon mindestens 0,5 % Glutathion, mindestens 1 % Glutathion, mindestens 2 % Glutathion, mindestens 3 % Glutathion, mindestens 4 % Glutathion, mindestens 5 % Glutathion, mindestens 6 % Glutathion, mindestens 7 % Glutathion, mindestens 8 % Glutathion, mindestens 9 % Glutathion oder mindestens 10 % Glutathion nach Gewicht relativ zum Gewicht von Feststoffen der Hefe enthält; und/oder
(ii) die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon auf die Trauben und Blätter in einem Anteil von 0,05 bis 20 kg/ha, 0,1 bis 20 kg/ha, 0,5 bis 20 kg/ha, 1 bis 15 kg/ha, 1 bis 10 kg/ha, 2 bis 10 kg/ha oder 2 bis 5 kg/ha aufgetragen wird;
wobei bevorzugt die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon auf die Trauben und Blätter in einem Anteil von mindestens 2 kg/ha aufgetragen wird.

8. Verwendung einer wirksamen Menge einer mit Glutathion angereicherten Hefe, einer aktiven mit Glutathion angereicherten Hefe, einer inaktivierten mit Glutathion angereicherten Hefe, eines mit Glutathion angereicherten Hefeextrakts, eines mit Glutathion angereicherten Hefeautolysats, mit Glutathion angereicherter Hefezellwände oder einer Kombination davon zum Erhöhen des Gehalts von Thiolvorläufern in Trauben, umfassend das Auftragen auf die Trauben und Blätter nach Fruchtansatz der mit Glutathion angereicherten Hefe, der aktiven mit Glutathion angereicherten Hefe, der inaktivierten mit Glutathion angereicherten Hefe, des mit Glutathion angereicherten Hefeextrakts, des mit Glutathion angereicherten Hefeautolysats, der mit Glutathion angereicherten Hefezellwände oder der Kombination davon, wodurch Trauben ein erhöhter Gehalt von Thiolvorläufern im Vergleich zu unbehandelten Trauben gegeben wird, wobei die Thiolvorläufer Folgendes sind:
(i) ausgewählt aus der Gruppe bestehend aus Cystein-3M (S-3-(Hexan-1-ol)-L-Cystein), Cysteinyl-Glycin-3M (3-S-Cysteinylglycinhexan-1-ol), Gamma-Glutamyl-Cystein-3MH (S-3-(Hexan-1-ol)-Gamma-Glutamyl-Cystein), Glutathion-3MH (S-(3-Hexan-1-ol)-Glutathion), Cys-4MMP (4-(4-Methylpentan-2-on)-L-Cystein), CysGly-4MMP-Vorläufer (S-4-Mercapto-4-Methylpentan-2-on-1-Cysteinyl-Glycin), Gamma-GluCys-4MMP-Vorläufer (S-4-Mercapto-4-Methylpentan-2-on-N-(L-Gamma-Glutamyl)-L-Cystein), Glut-4MMP-Vorläufer (S-4-(4-Methylpentan-2-on)-Glutathion) und Kombinationen davon, wobei optional der Thiolvorläufer Glutathion-3MH (S-(3-Hexan-1-ol)-Glutathion) und/oder Cys-4MMP (4-(4-Methylpentan-2-on)-L-Cystein) ist; und/oder
(ii) die Vorläufer von flüchtigem Thiol-3-Mercaptohexan-1-ol (3MH) und/oder flüchtigem Thiol-4-Mercapto-4-Methylpentan-2-on (4MPP).

9. Verwendung nach Anspruch 8, wobei die Trauben weiße oder rote Trauben sind; wobei optional die weißen Trauben Sauvignon-Trauben, Gewürztraminer-Trauben, Riesling-Trauben oder Verdejo-Trauben sind.

10. Verwendung nach Anspruch 8 oder 9, wobei:
(a) die Hefe *Saccharomyces* ist; wobei optional die Hefe zur Art *S. cerevisiae* oder *S. cerevisiae var. boulardii* gehört; oder
(b) die Hefe eine Nicht*-Saccharomyces-*Hefe ist; wobei optional die Nicht-*Saccharomyces-*Hefe zu den Gattungen *Candida, Torula, Hanseniaspora, Hansenula, Kluyveromyces, Metschnikowia, Pichia, Starmerella, Torulaspora* oder Gemisch davon gehört.

11. Verwendung nach einem der Ansprüche 8 bis 10, wobei die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon zwischen dem Anfang von Veraison und dem Ende von Veraison aufgetragen wird, wobei optional:
(i) (a) die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon bei mindestens 2 % Veraison aufgetragen wird und/oder (b) die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon zwischen 2 % und 98 % Veraison, zwischen 2 % und 90 % Veraison, zwischen 2 % und 80 % Veraison, zwischen 2 % und 70 % Veraison, zwischen 2 % und 60 % Veraison, zwischen 2 % und 50 % Veraison, zwischen 2 % und 40 % Veraison, zwischen 2 % und 30 % Veraison, zwischen 2 % und 20 % Veraison, zwischen 2 % und 15 % Veraison, zwischen 2 % und 10 % Veraison, zwischen 2 % und 8 % Veraison oder zwischen 2 % und 6 % Veraison aufgetragen wird; oder
(ii) die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon bei phänologischer Wachstumsphase E-L 34 oder danach aufgetragen wird, wobei bevorzugt die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon zwischen phänologischen Wachstumsphasen E-L 34 und E-L 39, zwischen phänologischen Wachstumsphasen E-L 34 und E-L 38, zwischen phänologischen Wachstumsphasen E-L 34 und E-L 37 oder zwischen phänologischen Wachstumsphasen E-L 34 und E-L 36 aufgetragen wird, wobei bevorzugter die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon bei phänologischen Wachstumsphasen E-L 34 und/oder E-L 35 aufgetragen wird.

12. Verwendung nach einem der Ansprüche 8 bis 11, wobei
(i) ein einzelnes Auftragen der mit Glutathion angereicherten Hefe, der aktiven mit Glutathion angereicherten Hefe, der inaktivierten mit Glutathion angereicherten Hefe, des mit Glutathion angereicherten Hefeextrakts, des mit Glutathion angereicherten Hefeautolysats, der mit Glutathion angereicherten Hefezellwände oder der Kombination davon durchgeführt wird;
(ii) die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon mindestens 0,5 % Glutathion, mindestens 1 % Glutathion, mindestens 2 % Glutathion, mindestens 3 % Glutathion, mindestens 4 % Glutathion, mindestens 5 % Glutathion, mindestens 6 % Glutathion, mindestens 7 % Glutathion, mindestens 8 % Glutathion, mindestens 9 % Glutathion oder mindestens 10 % Glutathion nach Gewicht relativ zum Gewicht von Feststoffen der Hefe enthält; und/oder
(iii) die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon auf die Trauben und Blätter in einem Anteil von 0,05 bis 20 kg/ha, 0,1 bis 20 kg/ha, 0,5 bis 20 kg/ha, 1 bis 15 kg/ha, 1 bis 10 kg/ha, 2 bis 10 kg/ha oder 2 bis 5 kg/ha aufgetragen wird;
wobei bevorzugt die mit Glutathion angereicherte Hefe, die aktive mit Glutathion angereicherte Hefe, die inaktivierte mit Glutathion angereicherte Hefe, der mit Glutathion angereicherte Hefeextrakt, das mit Glutathion angereicherte Hefeautolysat, die mit Glutathion angereicherten Hefezellwände oder die Kombination davon auf die Trauben und Blätter in einem Anteil von mindestens 2 kg/ha aufgetragen wird.

## Revendications

1. Procédé d'augmentation de la teneur en précurseurs de thiols dans le raisin, comprenant l'application d'une quantité efficace d'une levure enrichie en glutathion, d'une levure active enrichie en glutathion, d'une levure inactivée enrichie en glutathion, d'un extrait de levure enrichi en glutathion, d'un autolysat de levure enrichi en glutathion, de parois cellulaires de levure enrichies en glutathion ou d'une combinaison de ceux-ci au raisin et au feuillage après la nouaison, donnant ainsi au raisin une teneur accrue en précurseurs de thiols par rapport à un raisin non traité, lesdits précurseurs de thiols :
(i) étant sélectionnés dans le groupe constitué par : cystéine-3M (S-3-(hexan-1-ol)-L-cystéine), cystéinyl-glycine-3M (3-S-cystéinylglycinehexan-1-ol), gamma-glutamyl-cystéine-3MH (S-3-(hexan-1-ol)-gamma-glutamyl-cystéine), glutathion-3MH (S-(3-hexan-1-ol)-glutathion), Cys-4MMP (4-(4-méthylpentan-2-one)-L-cystéine), précurseur CysGly-4MMP (S-4-mercapto-4-méthylpentan-2-one-1-cystéinyl-glycine), précurseur gamma GluCys-4MMP (S-4-mercapto-4-méthylpentan-2-one-N-(L-gamma-glutamyl)-L-cystéine), précurseur Glut-4MMP (S-4-(4-méthylpentan-2-one)-glutathion), et les combinaisons de ceux-ci, ledit précurseur de thiol étant éventuellement le glutathion-3MH (S-(3-hexan-1-ol)-glutathion) et/ou le Cys-4MMP (4-(4-méthylpentan-2-one)-L-cystéine) ; et/ou
(ii) consistant en les précurseurs des thiols volatils 3-mercaptohexan-1-ol (3MH) et/ou 4-mercapto-4-méthylpentan-2-one (4MPP).

2. Procédé de production d'une préparation à base de raisin présentant une teneur accrue en précurseurs de thiols, comprenant :
(1) l'application d'une quantité efficace d'une levure enrichie en glutathion, d'une levure active enrichie en glutathion, d'une levure inactivée enrichie en glutathion, d'un extrait de levure enrichi en glutathion, d'un autolysat de levure enrichi en glutathion, de parois cellulaires de levure enrichies en glutathion ou d'une combinaison de ceux-ci sur le raisin et le feuillage après la nouaison ; et
(2) la récolte et le traitement du raisin pour obtenir la préparation à base de raisin ayant une teneur accrue en précurseurs de thiols, lesdits précurseurs de thiols :
(i) étant sélectionnés dans le groupe constitué par : cystéine-3M (S-3-(hexan-1-ol)-L-cystéine), cystéinyl-glycine-3M (3-S-cystéinylglycinehexan-1-ol), gamma-glutamyl-cystéine-3MH (S-3-(hexan-1-ol)-gamma-glutamyl-cystéine), glutathion-3MH (S-(3-hexan-1-ol)-glutathion), Cys-4MMP (4-(4-méthylpentan-2-one)-L-cystéine), précurseur CysGly-4MMP (S-4-mercapto-4-méthylpentan-2-one-1-cystéinyl-glycine), précurseur gamma GluCys-4MMP (S-4-mercapto-4-méthylpentan-2-one-N-(L-gamma-glutamyl)-L-cystéine), précurseur Glut-4MMP (S-4-(4-méthylpentan-2-one)-glutathion), et les combinaisons de ceux-ci, ledit précurseur de thiol étant éventuellement le glutathion-3MH (S-(3-hexan-1-ol)-glutathion) et/ou le Cys-4MMP (4-(4-méthylpentan-2-one)-L-cystéine) ; et/ou
(ii) consistant en les précurseurs des thiols volatils 3-mercaptohexan-1-ol (3MH) et/ou 4-mercapto-4-méthylpentan-2-one (4MPP).

3. Procédé selon la revendication 1 ou 2, dans lequel le raisin est du raisin blanc ou rouge ; ledit raisin blanc étant éventuellement du raisin de Sauvignon, de Gewurztraminer, de Riesling ou de Verdejo.

4. Procédé selon l'une quelconque des revendications 1 à 3, dans lequel :
(a) la levure est une *Saccharomyces* ; ladite levure appartenant éventuellement à l'espèce *S. cerevisiae* ou *S. cerevisiae var. boulardii* ; ou
(b) la levure est une levure autre que *Saccharomyces* ; ladite levure autre que *Saccharomyces* appartenant éventuellement aux genres *Candida, Torula, Hanseniaspora, Hansenula, Kluyveromyces, Metschnikowia, Pichia, Starmerella, Torulaspora* ou à un mélange de ceux-ci.

5. Procédé selon l'une quelconque des revendications 1 à 4, dans lequel la levure enrichie en glutathion, la levure active enrichie en glutathion, la levure inactivée enrichie en glutathion, l'extrait de levure enrichi en glutathion, l'autolysat de levure enrichi en glutathion, les parois cellulaires de levure enrichies en glutathion ou la combinaison de ceux-ci sont appliqués :
(i) entre le début et la fin de la véraison, étant entendu éventuellement que :
(a) la levure enrichie en glutathion, la levure active enrichie en glutathion, la levure inactivée enrichie en glutathion, l'extrait de levure enrichi en glutathion, l'autolysat de levure enrichi en glutathion, les parois cellulaires de levure enrichies en glutathion ou la combinaison de ceux-ci sont appliqués à au moins 2 % de la véraison ; et/ou
(b) la levure enrichie en glutathion, la levure active enrichie en glutathion, la levure inactivée enrichie en glutathion, l'extrait de levure enrichi en glutathion, l'autolysat de levure enrichi en glutathion, les parois cellulaires de levure enrichies en glutathion ou la combinaison de ceux-ci sont appliqués entre 2 % et 98 % de la véraison, entre 2 % et 90 % de la véraison, entre 2 % et 80 % de la véraison, entre 2 % et 70 % de la véraison, entre 2 % et 60 % de la véraison, entre 2 % et 50 % de la véraison, entre 2 % et 40 % de la véraison, entre 2 % et 30 % de la véraison, entre 2 % et 20 % de la véraison, entre 2 % et 15 % de la véraison, entre 2 % et 10 % de la véraison, entre 2 % et 8 % de la véraison, ou entre 2 % et 6 % de la véraison ; ou
(ii) au stade de croissance phénologique E-L 27 ou à un stade ultérieur ; ou
(iii) au stade de croissance phénologique E-L 34 ou à un stade ultérieur, lesdites levure enrichie en glutathion, levure active enrichie en glutathion, levure inactivée enrichie en glutathion, ledit extrait de levure enrichi en glutathion, ledit autolysat de levure enrichi en glutathion, lesdites parois cellulaires de levure enrichies en glutathion ou ladite combinaison de ceux-ci étant de préférence appliqués entre les stades de croissance phénologique E-L 34 et E-L 39, entre les stades de croissance phénologique E-L 34 et E-L 38, entre les stades de croissance phénologique E-L 34 et E-L 37, ou entre les stades de croissance phénologique E-L 34 et E-L 36 ; lesdites levure enrichie en glutathion, levure active enrichie en glutathion, levure inactivée enrichie en glutathion, ledit extrait de levure enrichi en glutathion, ledit autolysat de levure enrichi en glutathion, lesdites parois cellulaires de levure enrichies en glutathion ou ladite combinaison de ceux-ci étant plus préférablement appliqués aux stades de croissance phénologique E-L 34 et/ou E-L 35.

6. Procédé selon l'une quelconque des revendications 1 à 5, dans lequel il est effectué une seule application de levure enrichie en glutathion, levure active enrichie en glutathion, levure inactivée enrichie en glutathion, extrait de levure enrichi en glutathion, autolysat de levure enrichi en glutathion, parois cellulaires de levure enrichies en glutathion ou combinaison de ceux-ci.

7. Procédé selon l'une quelconque des revendications 1 à 6, dans lequel :
(i) ladite levure enrichie en glutathion, ladite levure active enrichie en glutathion, ladite levure inactivée enrichie en glutathion, ledit extrait de levure enrichi en glutathion, ledit autolysat de levure enrichi en glutathion, lesdites parois cellulaires de levure enrichies en glutathion ou ladite combinaison de ceux-ci contiennent au moins 0,5 % de glutathion, au moins 1 % de glutathion, au moins 2 % de glutathion, au moins 3 % de glutathion, au moins 4 % de glutathion, au moins 5 % de glutathion, au moins 6 % de glutathion, au moins 7 % de glutathion, au moins 8 % de glutathion, au moins 9 % de glutathion ou au moins 10 % de glutathion en poids par rapport au poids des solides de la levure ; et/ou
(ii) ladite levure enrichie en glutathion, ladite levure active enrichie en glutathion, ladite levure inactivée enrichie en glutathion, ledit extrait de levure enrichi en glutathion, ledit autolysat de levure enrichi en glutathion, lesdites parois cellulaires de levure enrichies en glutathion ou ladite combinaison de ceux-ci sont appliqués au raisin et au feuillage à raison de 0,05 à 20 kg/ha, de 0,1 à 20 kg/ha, de 0,5 à 20 kg/ha, 1 à 15 kg/ha, 1 à 10 kg/ha, 2 à 10 kg/ha ou 2 à 5 kg/ha ladite levure enrichie en glutathion, ladite levure active enrichie en glutathion, ladite levure inactivée enrichie en glutathion, ledit extrait de levure enrichi en glutathion, ledit autolysat de levure enrichi en glutathion, lesdites parois cellulaires de levure enrichies en glutathion ou ladite combinaison de ceux-ci étant de préférence appliqués sur le raisin et le feuillage à raison d'au moins 2 kg/ha.

8. Utilisation d'une quantité efficace de levure enrichie en glutathion, levure active enrichie en glutathion, levure inactivée enrichie en glutathion, extrait de levure enrichi en glutathion, autolysat de levure enrichi en glutathion, parois cellulaires de levure enrichies en glutathion ou d'une combinaison de ceux-ci pour augmenter la teneur en précurseurs de thiols dans le raisin, comprenant l'application au raisin et au feuillage, après la nouaison, de ladite levure enrichie en glutathion, ladite levure active enrichie en glutathion, ladite levure inactivée enrichie en glutathion, ledit extrait de levure enrichi en glutathion, ledit autolysat de levure enrichi en glutathion, lesdites parois cellulaires de levure enrichies en glutathion ou ladite combinaison de ceux-ci, donnant ainsi au raisin une teneur accrue en précurseurs de thiols par rapport à un raisin non traité, lesdits précurseurs de thiols :
(i) étant sélectionnés dans le groupe constitué par : cystéine-3M (S-3-(hexan-1-ol)-L-cystéine), cystéinyl-glycine-3M (3-S-cystéinylglycinehexan-1-ol), gamma-glutamyl-cystéine-3MH (S-3-(hexan-1-ol)-gamma-glutamyl-cystéine), glutathion-3MH (S-(3-hexan-1-ol)-glutathion), Cys-4MMP (4-(4-méthylpentan-2-one)-L-cystéine), précurseur CysGly-4MMP (S-4-mercapto-4-méthylpentan-2-one-1-cystéinyl-glycine), précurseur gamma GluCys-4MMP (S-4-mercapto-4-méthylpentan-2-one-N-(L-gamma-glutamyl)-L-cystéine), précurseur Glut-4MMP (S-4-(4-méthylpentan-2-one)-glutathion), et les combinaisons de ceux-ci, ledit précurseur de thiol étant éventuellement le glutathion-3MH (S-(3-hexan-1-ol)-glutathion) et/ou le Cys-4MMP (4-(4-méthylpentan-2-one)-L-cystéine) ; et/ou
(ii) consistant en les précurseurs des thiols volatils 3-mercaptohexan-1-ol (3MH) et/ou 4-mercapto-4-méthylpentan-2-one (4MPP).

9. Utilisation selon la revendication 8, dans laquelle le raisin est un raisin blanc ou rouge ; ledit raisin blanc étant éventuellement du raisin de Sauvignon, de Gewurztraminer, de Riesling ou de Verdejo.

10. Utilisation selon la revendication 8 ou 9, dans laquelle :
(a) la levure est une *Saccharomyces* ; ladite levure appartenant éventuellement à l'espèce *S. cerevisiae* ou *S. cerevisiae var. boulardii* ; ou
(b) la levure est une levure autre que *Saccharomyces* ; ladite levure autre que *Saccharomyces* appartenant éventuellement aux genres *Candida, Torula, Hanseniaspora, Hansenula, Kluyveromyces, Metschnikowia, Pichia, Starmerella, Torulaspora* ou à un mélange de ceux-ci.

11. Utilisation selon l'une quelconque des revendications 8 à 10, dans laquelle la levure enrichie en glutathion, la levure active enrichie en glutathion, la levure inactivée enrichie en glutathion, l'extrait de levure enrichi en glutathion, l'autolysat de levure enrichi en glutathion, les parois cellulaires de levure enrichies en glutathion ou la combinaison de ceux-ci sont appliqués entre le début et la fin de la véraison, étant entendu éventuellement que :
(i) (a) la levure enrichie en glutathion, la levure active enrichie en glutathion, la levure inactivée enrichie en glutathion, l'extrait de levure enrichi en glutathion, l'autolysat de levure enrichi en glutathion, les parois cellulaires de levure enrichies en glutathion ou la combinaison de ceux-ci sont appliqués à au moins 2 % de la véraison ; et/ou (b) la levure enrichie en glutathion, la levure active enrichie en glutathion, la levure inactivée enrichie en glutathion, l'extrait de levure enrichi en glutathion, l'autolysat de levure enrichi en glutathion, les parois cellulaires de levure enrichies en glutathion ou la combinaison de ceux-ci sont appliqués entre 2 % et 98 % de la véraison, entre 2 % et 90 % de la véraison, entre 2 % et 80 % de la véraison, entre 2 % et 70 % de la véraison, entre 2 % et 60 % de la véraison, entre 2 % et 50 % de la véraison, entre 2 % et 40 % de la véraison, entre 2 % et 30 % de la véraison, entre 2 % et 20 % de la véraison, entre 2 % et 15 % de la véraison, entre 2 % et 10 % de la véraison, entre 2 % et 8 % de la véraison, ou entre 2 % et 6 % de la véraison ; ou
(ii) la levure enrichie en glutathion, la levure active enrichie en glutathion, la levure inactivée enrichie en glutathion, l'extrait de levure enrichi en glutathion, l'autolysat de levure enrichi en glutathion, les parois cellulaires de levure enrichies en glutathion ou la combinaison de ceux-ci sont appliqués au stade de croissance phénologique E-L 34 ou à un stade ultérieur, lesdites levure enrichie en glutathion, levure active enrichie en glutathion, levure inactivée enrichie en glutathion, ledit extrait de levure enrichi en glutathion, ledit de levure enrichi en glutathion, lesdites parois cellulaires de levure enrichies en glutathion ou ladite combinaison de ceux-ci étant de préférence appliqués entre les stades de croissance phénologique E-L 34 et E-L 39, entre les stades de croissance phénologique E-L 34 et E-L 38, entre les stades de croissance phénologique E-L 34 et E-L 37, ou entre les stades de croissance phénologique E-L 34 et E-L 36, lesdites levure enrichie en glutathion, levure active enrichie en glutathion, levure inactivée enrichie en glutathion, ledit extrait de levure enrichi en glutathion, ledit autolysat de levure enrichi en glutathion, lesdites parois cellulaires de levure enrichies en glutathion ou ladite combinaison de ceux-ci étant plus préférablement appliqués aux stades de croissance phénologique E-L 34 et/ou E-L 35.

12. Utilisation selon l'une quelconque des revendications 8 à 11, dans laquelle
(i) il est effectué une seule application de levure enrichie en glutathion, levure active enrichie en glutathion, levure inactivée enrichie en glutathion, extrait de levure enrichi en glutathion, autolysat de levure enrichi en glutathion, parois cellulaires de levure enrichies en glutathion ou combinaison de ceux-ci ;
(ii) ladite levure enrichie en glutathion, ladite levure active enrichie en glutathion, ladite levure inactivée enrichie en glutathion, ledit extrait de levure enrichi en glutathion, ledit autolysat de levure enrichi en glutathion, lesdites parois cellulaires de levure enrichies en glutathion ou ladite combinaison de ceux-ci contiennent au moins 0,5 % de glutathion, au moins 1 % de glutathion, au moins 2 % de glutathion, au moins 3 % de glutathion, au moins 4 % de glutathion, au moins 5 % de glutathion, au moins 6 % de glutathion, au moins 7 % de glutathion, au moins 8 % de glutathion, au moins 9 % de glutathion ou au moins 10 % de glutathion en poids par rapport au poids des solides de la levure ; et/ou
(iii) ladite levure enrichie en glutathion, ladite levure active enrichie en glutathion, ladite levure inactivée enrichie en glutathion, ledit extrait de levure enrichi en glutathion, ledit autolysat de levure enrichi en glutathion, lesdites parois cellulaires de levure enrichies en glutathion ou ladite combinaison de ceux-ci sont appliqués au raisin et au feuillage à raison de 0,05 à 20 kg/ha, de 0,1 à 20 kg/ha, de 0,5 à 20 kg/ha, 1 à 15 kg/ha, 1 à 10 kg/ha, 2 à 10 kg/ha ou 2 à 5 kg/ha ladite levure enrichie en glutathion, ladite levure active enrichie en glutathion, ladite levure inactivée enrichie en glutathion, ledit extrait de levure enrichi en glutathion, ledit autolysat de levure enrichi en glutathion, lesdites parois cellulaires de levure enrichies en glutathion ou ladite combinaison de ceux-ci étant de préférence appliqués sur le raisin et le feuillage à raison d'au moins 2 kg/ha.
